# EUROPEAN PATENT APPLICATION

(11) **EP 2 463 068 A1**
(43) Date of publication of application: **13.06.2012**
(21) Application number: 11192478.3
(22) Date of filing: 07.12.2011
(51) Int. Cl.: B26D 1/00, B23K 26/00, B41M 5/24

(54) **A cutting blade and method of manufacturing the same**

(30) Priority: 10.12.2010 US 201161421811 P; 27.10.2011 US 201113283262
(71) Applicant: Stanley Black & Decker, Inc., New Britain, CT 06053 (US)
(72) Inventor: Scillia, Robert L., West Hartford, CT 06107 (US); Culf, Peter Geoffrey, Rotherham, Yorkshire S60 3BY (GB)
(74) Representative: Stentiford, Andrew Charles

(57) **Abstract**

A blade that includes a body formed from a carbon steel material is provided. The body has a cutting edge portion and a side surface. The side surface has a colored oxide layer formed thereon. Selected portions of the oxide layer have been removed to reveal the underlying carbon steel material so as to provide indicia on the surface of the blade by virtue of a color contrast between the colored oxide layer and the revealed carbon steel material. A method of manufacturing such a blade is also provided.

## Description

The present invention relates to a cutting blade and a method of manufacturing the same.

The manufacture of blades, such as those used in various types of knives, and other cutting instruments, involves a sequence of manufacturing procedures each of which is used to achieve a certain characteristic of the blade. For example, in one type of method for manufacturing a utility knife blade, a strip of steel blade stock material is provided in a coil form. The strip of blade stock is generally fed through a heat treating oven to harden and temper the strip material. The heat treated strip is then ground, honed and/or stropped to form the facets defining a cutting edge along one side of the strip. The strip is further processed and often marked with indicia relating to the source of the blade or other information.

The present invention provides several improvements over the prior art.

One aspect of the present invention provides a blade that includes a body formed from a carbon steel material. The body has a cutting edge portion and a side surface. The side surface of the body has a colored oxide layer formed thereon. Selected portions of the oxide layer are removed to reveal the underlying carbon steel material so as to provide indicia on the surface of the blade by virtue of a color contrast between the colored oxide layer and the revealed carbon steel material.

Preferably the cutting edge portion has a hardness greater than a hardness of a remaining body portion.

Preferably the hardness of the remaining body portion is between 50 HRC and 56 HRC.

Preferably the hardness of the cutting edge portion is between 60 HRC and 80 HRC.

Preferably the cutting edge portion of the blade is induction hardened.

Preferably the cutting edge portion of the blade is formed from a relatively higher grade carbon steel in comparison with a lower grade carbon steel of the remaining body portion.

Preferably the cutting edge portion of the blade is formed by laser deposition.

Preferably the blade is a knife blade suitable for mounting on a utility knife handle.

Preferably the oxide layer has gray-black color, black color, blue color or blue-back color.

Preferably the selected portions of the coloured oxide layer is removed with a laser beam.

Another aspect of the present invention provides a method of manufacturing a blade that includes providing a coil of strip carbon steel material having a surface thereon to be marked; forming a colored oxide layer on the surface of the material; and selectively removing portions of the colored oxide layer to reveal underlying carbon steel material so as to form indicia on the surface of the material by virtue of a color contrast between the colored oxide layer and the revealed carbon steel material.

Preferably the forming is performed in an oxidizing atmosphere.

Preferably the oxidizing atmosphere is provided by a tubular member of a heat treatment furnace, and wherein the tubular member is constructed and arranged to allow a path for air ingress.

Preferably the method comprises providing a supplemental oxidizing atmosphere.

Preferably the supplemental oxidizing atmosphere is provided by an air supply system configured to supply air at a pressure of 1 bar and a flow rate of 26 liters/minute.

Preferably the forming is performed at a temperature between 280 and 400 °C.

Preferably the forming is performed at a temperature of 380 °C.

Preferably subsequent to the forming, quenching the material for ease of handling during the selective removing.

Preferably the quenching is performed by passing the material between fluid cooled quench blocks disposed above and below the material.

Preferably the removing comprises applying a laser beam to the selected portions of the oxide layer.

Preferably the method further comprises hardening, subsequent to the removing, an edge along one side of the carbon steel strip material.

Preferably the hardening comprises induction heating the edge of the carbon steel strip material.

Alternatively or additionally the hardening comprises depositing a mixture including a hard material onto the edge of the carbon steel strip material.

Preferably the method further comprises grinding the carbon steel strip material, subsequent to the hardening, to form facets defining the edge along one side of the carbon steel strip material.

Preferably the method further comprises forming individual blades from the strip carbon steel material.

Preferably the forming is performed for a time period between about 45 and 75 seconds.

Preferably the forming is performed for a time period of 60 seconds.

Preferably the power range of the laser beam is between 50 and 100 Watts.

These and other aspects of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In one embodiment, the structural components illustrated can be considered are drawn to scale. It is to be expressly understood, however, that the drawings are for the purpose of illustration and description only and are not intended as a definition of the limits of the invention. It shall also be appreciated that the features of one embodiment disclosed herein can be used in other embodiments disclosed herein. As used in the specification and in the claims, the singular form of "a", "an", and "the" include plural referents unless the context clearly dictates otherwise.
FIG. 1 shows a method for manufacturing a blade in accordance with an embodiment of the invention;
FIG. 2 shows a carbon steel strip material with score lines formed thereon in accordance with one embodiment of the invention;
FIG. 3 shows a system for forming a colored oxide layer on a surface of the carbon steel strip material in accordance with an embodiment of the invention;
FIG. 4 shows a top plan view of the carbon steel strip material with the colored oxide layer formed on the surface of the carbon steel strip material in accordance with an embodiment of the invention;
FIG. 5 shows a cross-sectional view of the carbon steel strip material (shown in FIG. 4) with the colored oxide layer formed on surfaces of the carbon steel strip material in accordance with an embodiment of the invention;
FIGS. 6 and 7 show a procedure in the method for manufacturing the blade in which portions of the colored oxide layer on the surface of the carbon steel strip material are selectively removed in accordance with an embodiment of the invention;
FIG. 8 shows a top plan view of the carbon steel strip material with the indicia formed on the colored oxide layer of the carbon steel strip material in accordance with an embodiment of the invention; and
FIG. 9 shows a top plan view of a carbon steel blade with the indicia formed on the side surface in accordance with an embodiment of the invention.

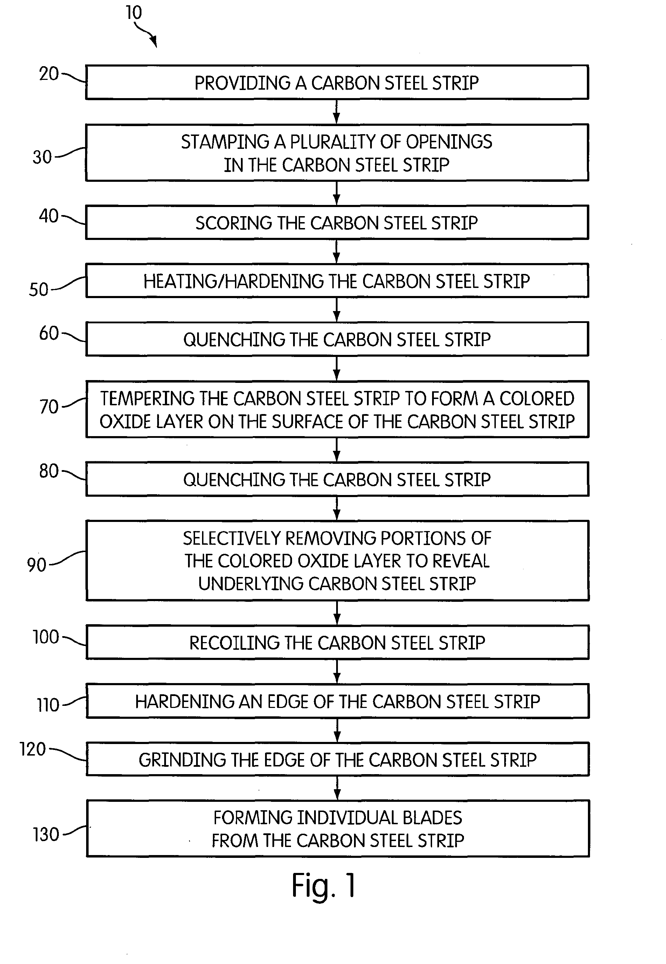

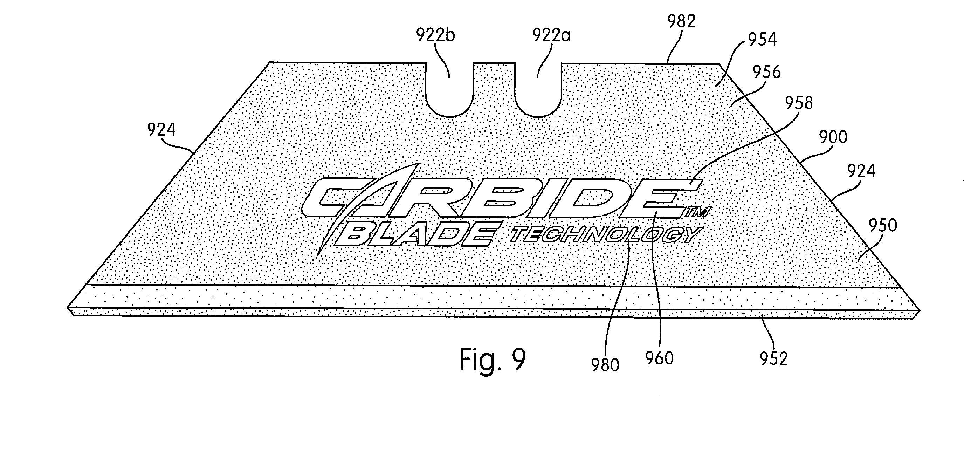

FIGS. 1, 2, 4 and 6 illustrate a method of manufacturing a blade 900 (as shown in FIG. 9) in accordance with various aspects of the invention. Referring to FIGS. 1, 2, 4 and 6, the method includes providing a coil of strip carbon steel material 200 having a surface 202 thereon to be marked; forming a colored oxide layer 220 on the surface 202 of the material 200; and selectively removing portions 230 of the colored oxide layer 220 to reveal underlying carbon steel material 200 so as to form indicia 250 on the surface 202 of the material 200 by virtue of a color contrast between the colored oxide layer 220 and the revealed carbon steel material 200.

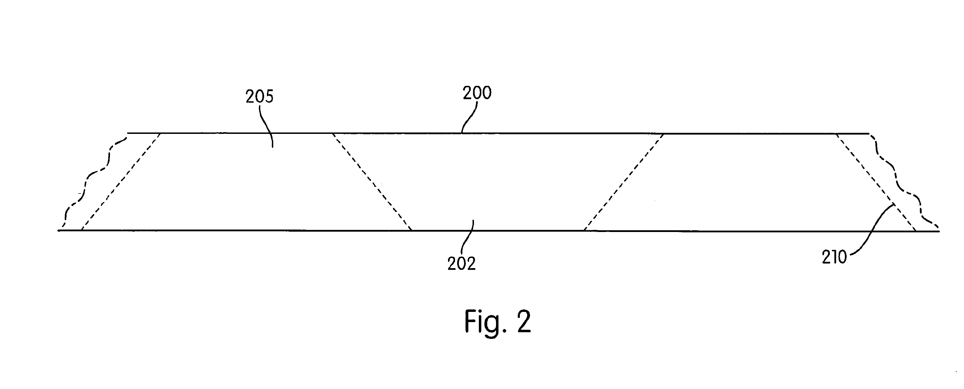

FIG. 1 illustrates more of the details of the method. Referring to FIGS. 1 and 2, a strip of carbon steel blade stock material 200, from which a plurality of blades 900 (as shown in FIG. 9) are produced, is provided at procedure 20 of method 10. In one embodiment, the carbon steel is provided in a coil form, for example, to render the strip more compact to facilitate handling. In one embodiment, the carbon steel material is a high carbon steel material such as, for example, carbon steel grade C1095, although it is contemplated that other types of materials could be used in other embodiments. For example, in one embodiment, the strip of blade stock material can be made from stainless steel material. In another embodiment, the strip of blade stock material can be made from other types of steel, or other types of metal materials.

The length of the strip in the coil can be as long as 1 kilometer (km) or more, although shorter coils can also be provided. The strip may also be provided in a multiple coils configuration, the multiple coils being welded end to end. The dimension of the strip can be selected according to desired dimensions of the blade. For example, in one non-limiting example, the strip can have a width between 9 and 25 mm and a thickness between 0.4 and 0.8 mm. In another non-limiting example, the strip can have a width of 19 mm and a thickness of 0.6 mm. However, the strip can have other dimensions depending on the intended use of the blade that would be formed from the carbon steel strip. In one embodiment, the carbon steel strip is provided with a hardness between 200 and 300 HV.

At procedure 30, the carbon steel strip material 200 is delivered to a punch press where a plurality of openings or recessed are stamped into the strip to define attachment points employed to retain the blade in a cartridge (not shown) or onto a blade carrier (not shown) for utility knife (not shown).

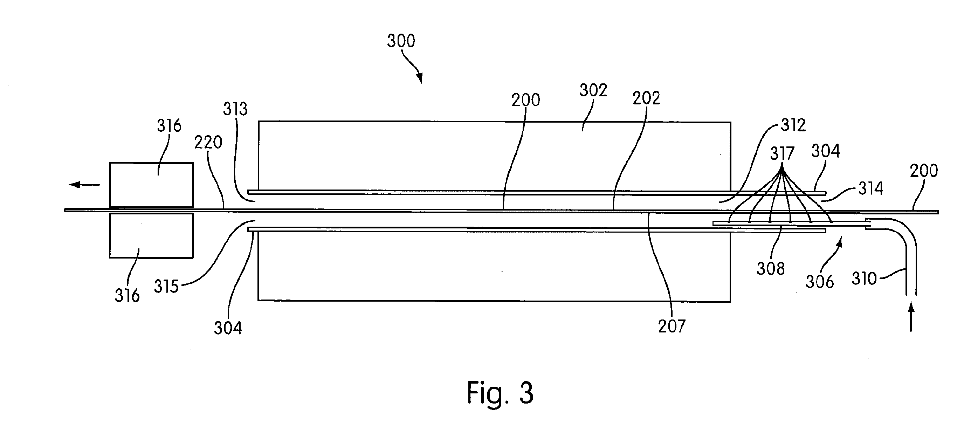

In one embodiment, a brand name, logo or other indicia may be stamped on the carbon steel strip material 200 using a pressing tool. In one embodiment, the embossed indicia (i.e., brand name, logo or other indicia) are stamped on a surface 207 (as shown in FIG. 3) opposite to the surface 202 on which the laser formed indicia 250 are formed. In another embodiment, the brand name, logo or other indicia may be scored on the surface 207 with a blanking tool. Since the brand name, logo or other indicia so formed on the surface of the carbon steel strip material 200 are recessed or scored in the underlying carbon steel material, the brand name, logo or other indicia are translated to the overlying colored oxide layer formed on the surface 207.

The carbon steel strip material 200 is then scored at procedure 40 to form a plurality of longitudinally spaced score lines, wherein each score line corresponds to a side edge 924 (as shown in FIG. 9) of a respective blade and defines a breaking line for later snapping or cutting the scored strip into a plurality of blades. Since the breaking lines so formed on the surface of the carbon steel strip material 200 are scored, the breaking lines are translated to the overlying colored oxide layer formed on the surfaces of the carbon steel strip material 200. Note that, in some embodiments, because the angled side edges (scored) are shielded from atmospheric gases (by virtue of their connection to adjacent blades) during the period in which the oxide layer is formed on the major surfaces of the strip, the side edges of the blade member may be devoid of the oxide layer when the blade members are snapped off (separated) from the strip to reveal the edge surface regions formally connected..

FIG. 2 is a schematic representation of a portion of the carbon steel strip material 200 that shows the score lines 210. The score lines define individual blades 205 that have a trapezoid shape. Other forms and shapes such as parallelogram blades, hook blades, etc. may also be obtained with a selection of an appropriate scoring configuration. In one embodiment, the scoring and piercing procedures of procedures 30 and 40 can be combined into a single stamping operation. In one embodiment, the stamped indicia on the side surface 207 is formed in the same stamping operation as the procedures 30 and 40. In another embodiment, the stamped indicia on the side surface 207 are formed in a stamping operation that is different from the single stamping operation of procedures 30 and 40.

Referring to FIGS. 1 and 2, the coil of pressed carbon steel strip material 200 of blade stock is fed at procedure 50 through a heat treatment line to harden the carbon steel strip material 200. In this procedure, the carbon steel is run off of the coil and passed through a hardening furnace which heats the carbon steel strip material 200 to a temperature above a transition temperature. The transition temperature is the temperature at which the structure of the carbon steel strip material 200 changes from a body centered cubic structure, which is stable at room temperature, to a face centered cubic structure known as austenite (austenitic structure), which is stable at elevated temperatures, i.e., above the transition temperature. The transition temperature varies depending on the carbon steel strip material 200 used. In one embodiment, the heating to harden the carbon steel strip material 200 is performed at a temperature between about 800 °C and 900 °C. For example, for a grade C1095 carbon steel, the transition temperature is approximately 820 °C (approximately 1508 °F.). In this instance, the heating to harden the carbon steel strip material 200 is performed at a temperature of approximately 890 °C. This higher temperature compensates the short soaking periods during austenitisation.

In one embodiment, the length of the hardening/heating furnace is approximately 26 feet (approximately 8 meters). The carbon steel strip material 200 travels at a speed approximately between 16 and 22 feet per minute (approximately between 5 and 7 meters per minute). A controlled atmosphere of, for example, "cracked ammonia," which contains essentially nitrogen and hydrogen, is provided in the furnace to prevent oxidation and discoloration of the carbon steel strip material 200 during hardening or heating procedure 50. Although cracked ammonia may be used to prevent oxidation and discoloration other gases may be used, such as but not limited to, "a scrubbed endothermic gas." In one embodiment, the heating of the carbon steel strip material 200 to harden the carbon steel strip material 200 is performed for a time period between about 75 and 105 seconds.

After exiting the heating (hardening) furnace, the heated carbon steel strip material 200 is quenched at procedure 60. In one embodiment, the hardened carbon steel strip material 200 is passed between liquid cooled conductive blocks disposed above and below the carbon steel strip material 200 to quench the carbon steel strip material 200. In one embodiment, the heated carbon steel strip material 200 is passed through water-cooled brass blocks with carbide wear strips in contact with the carbon steel strip material 200 to quench the carbon steel strip material 200. The brass blocks cool the carbon steel strip material 200 from the hardening temperature, for example (approximately 890 °C), to ambient temperature (approximately 25 °C) at a speed above a critical rate of cooling. The critical rate of cooling is a rate at which the carbon steel strip material 200 is cooled in order to ensure that the austenitic structure is transformed to martensitic structure. A martensitic structure is a body centered tetragonal structure. In the martensitic structure, the carbon steel strip material 200 is highly stressed internally. This internal stress is responsible for the phenomenon known as hardening of the carbon steel strip material 200. After hardening, the hardness of the carbon steel strip material 200 which was originally less than approximately 300 HV (before heat treatment) becomes approximately 850 to 890 HV (approximately 65.5 to 66.8 HRC). In one embodiment, the quenching of the carbon steel strip material 200 is performed for about 1 to 4 seconds. In another embodiment, a gas or a liquid is used to quench the carbon steel strip material 200.

Referring to FIGS. 1-3, at procedure 70, the heated and quenched carbon steel strip material 200 is fed through a system 300 configured for forming the colored oxide layer 220 on the surface 202 of the carbon steel strip material 200. In one embodiment, the colored oxide layer 220 is formed both on the surface 202 and on the surface 207 of the carbon steel strip material 200.

During the tempering procedure 70, an oxidizing atmosphere (e.g., air, or other oxidizing gas(es)) is within the system 300 to form the colored oxide layer 220 on the surface 202 of the carbon steel strip material 200. That is, instead of a controlled atmosphere of "cracked ammonia" (which contains essentially nitrogen and hydrogen), the tempering furnace has therein an oxidizing atmosphere during the forming of the colored oxide layer 220.

In one embodiment, the oxidizing atmosphere is provided within an open-ended tubular member 304 of a heat treatment furnace 302. In other manufacturing methods where oxidation is to be avoided, the opposite ends of the tubular member 304 would be sealed to prevent air from entering, and instead the tubular member 304 would contain "cracked ammonia." However, for the purposes herein, the tubular member 304 may be left unsealed, so as to permit oxidation. In another embodiment, a supplemental oxidizing atmosphere (gas) is provided into the tubular member 304 by a gas (e.g., air) supply system 306.

As can be appreciated from the above, in one embodiment, the system 300 includes the tempering furnace 302, the tubular member 304 configured to allow a path for air ingress, and the air supply system 306. The tubular member 304 of the tempering furnace 302 and the air supply system 306 are configured to provide the oxidizing atmosphere during the tempering procedure 70.

In one embodiment, the tempering furnace 302 has open ends 312 and 313 on both sides. In one embodiment, the tempering furnace 302 includes the open-ended tubular member 304 disposed therein. In other words, the tubular member 304 of the tempering furnace 302 has open ends 314 and 315 on both sides. In one embodiment, the ends 314 and 315 of the tubular member 304 extend outwardly away from the ends 312 and 313 of the tempering furnace 302. The tubular member 304 is configured to allow free air ingress into the tempering furnace 302. In one embodiment, the carbon steel strip material 200 is fed through the tubular member 304 of the tempering furnace 302 for forming the colored oxide layer 220 on the surface 202 of the carbon steel strip material 200.

In one embodiment, the tubular member 304 is made from a heat resisting alloy material. In one embodiment, the dimensions (e.g., diameter) of the tubular member 304 are large enough to induce a natural, unobstructed flow or circulation of air therethrough.

The air supply system 306, if provided, can include in one embodiment an air directing member 308 and an air supply 310. The air supply system 306 can be configured to provide additional air to the tempering furnace 302 to achieve more uniformity in the oxide layer 220. The air directing member 308 is configured to direct air from the air supply 310 to the tempering furnace 302 and thereby provide the oxidizing atmosphere therein. In one embodiment, the air directing member 308 includes a cylinder shaped configuration, although squared or other configurations can also be used. In one embodiment, the air directing member 308 may include a plurality of spaced apart openings 317 to supply air into the tempering furnace 302. In another embodiment, the air directing member 308 is a perforated tube. In one embodiment, the air directing member 308 is disposed at the entrance of the tempering furnace 302. In the illustrated embodiment, the air directing member 308 is introduced below the carbon steel strip material 200. It is contemplated that, in other embodiments, the air directing member 308 is disposed at any location in the tempering furnace 302 suitable for facilitating uniformity in the colored oxide layer 220 on the surface 202 of the carbon steel strip material 200. In one embodiment, the air supply 310 is a compressed air supply that is configured to supply air at a pressure of 1 bar and a flow rate of 26 liters/minute. In another embodiment, the air supply 310 is an air lance. In one embodiment, the air supply system 306 is disposed near the inlet end 314 of the tubular member 304.

In one embodiment, the tempering furnace 302 is configured to reduce the level of internal stress in the carbon steel strip material 200. As a result, some softening of the carbon steel of the strip occurs with an associated increase in ductility. For example, for a grade C1095 carbon steel, the tempering temperature is approximately 380 °C. In one embodiment, the forming (i.e., procedure 70) is performed at a temperature between 280 °C and 400 °C. This tempering process reduces the hardness of the carbon steel to within a specified range of 580 to 630 HV. In one embodiment, a length of the tempering furnace 302 is approximately 26 feet (approximately 8 meters). The carbon steel strip material 200 travels in the tempering furnace 302 at a speed between 16 and 22 feet per minute (approximately between 5 and 7 meters per minute). In one embodiment, the forming is performed for a time period between about 45 and 75 seconds. In one embodiment, the forming is performed for a time period of 60 seconds.

In one embodiment, the colored oxide layer 220 is gold in color, red in color, blue in color, black in color, gray-blue in color, blue-black in color or any other dark color that provides a good contrast with bright steel color. In another embodiment, the colored oxide layer 220 may be of any color other than the color of the bright steel. In one embodiment, the color of the oxide layer 220 may depend on the temperature maintained in the tempering furnace 302. In one embodiment, the carbon steel strip material 200 is tempered in the tempering furnace 302 at about 380 °C for about 60 seconds to obtain the oxide layer 220 having a bluish-back color.

In one embodiment, the chemical composition of the oxide layer 220 remains the same regardless of the color of the oxide layer 220. The color is determined by the thickness of the oxide layer 220 and is a function of an oxidizing potential of the atmosphere present in the tempering furnace, a temperature maintained in the tempering furnace and time spent by the carbon steel strip material 200 at that temperature. This color of the oxide layer 220 may also be referred to as temper color.

After tempering the carbon steel strip material 200, the carbon steel strip material 200 is quenched again at procedure 80. This quenching procedure provides ease of handling the carbon steel strip material 200 during laser marking procedure 90 (described in detail below). In one embodiment, the quenching is performed near the exit end of the tempering furnace 302. In one embodiment, the quenching of the carbon steel strip material 200 is performed for about 1 to 4 seconds. In one embodiment, the quenching is performed by passing the carbon steel strip material 200 between liquid (e.g., water) cooled quench blocks 316 disposed above and below the carbon steel strip material 200. In another embodiment, a gas or a liquid is used to quench the carbon steel strip material 200.

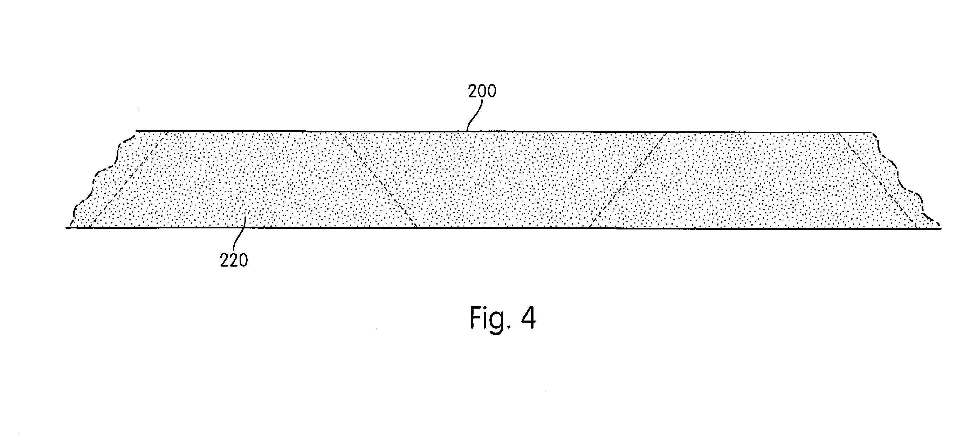

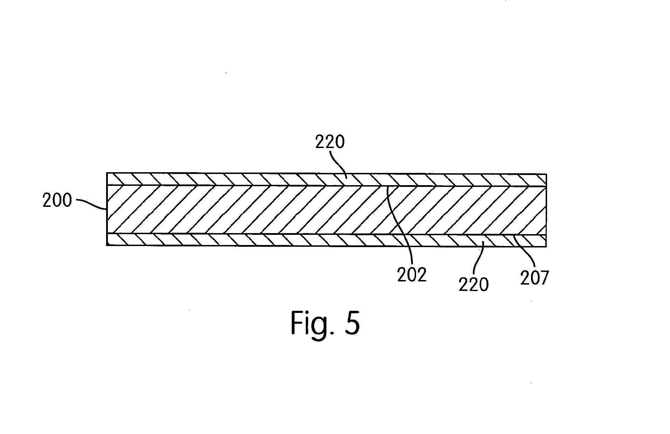

FIGS. 4 and 5 show a top plan view and a cross-sectional view, respectively, of the carbon steel strip material 200 with the colored oxide layer 220 formed on the surface 202 of the carbon steel strip material 200 in accordance with an embodiment. In one embodiment, as shown in FIG. 5, the colored oxide layer 220 is uniformly formed on the surface 202 of the carbon steel strip material 200. For sake of clarity, score lines and indicia formed during procedures 30 and 40 are not shown in the cross-sectional view of FIG. 5.

Referring to FIGS. 1 and 6-8, after quenching the carbon steel strip material 200, at procedure 90, portions 230 of the colored oxide layer 220 on the surface 202 of the carbon steel strip material 200 are selectively removed to reveal underlying carbon steel material 200 so as to form the indicia 250 on the surface 202 of the material 200 by virtue of a color contrast between the colored oxide layer 220 and the revealed carbon steel material 200. That is, the indicia 250 formed has a high optical contrast in relation to the surrounding colored oxide layer 220. The contrast is caused by the underlying carbon steel material. For example, the laser marking procedure 90 (described in detail below) will ablate away or otherwise remove the dark colored oxide layer reliving a bright steel indicia. This creates a dark background color and a bright indicia where the oxide has been removed.

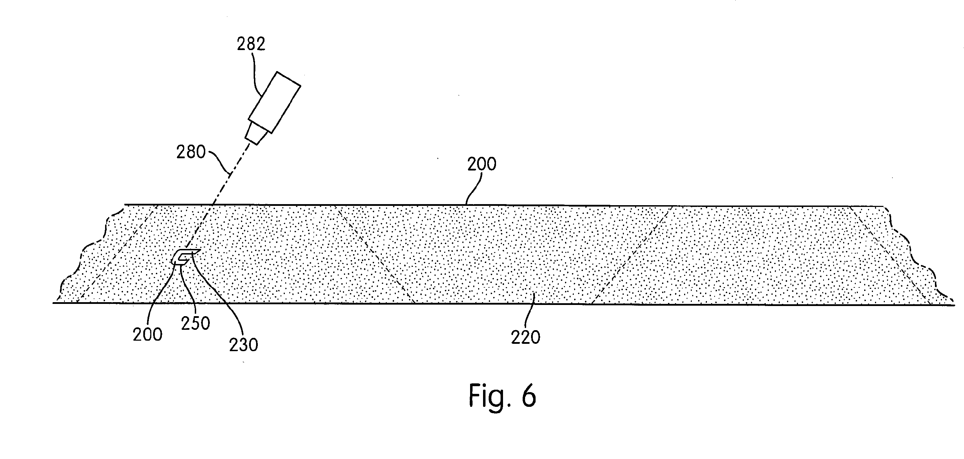

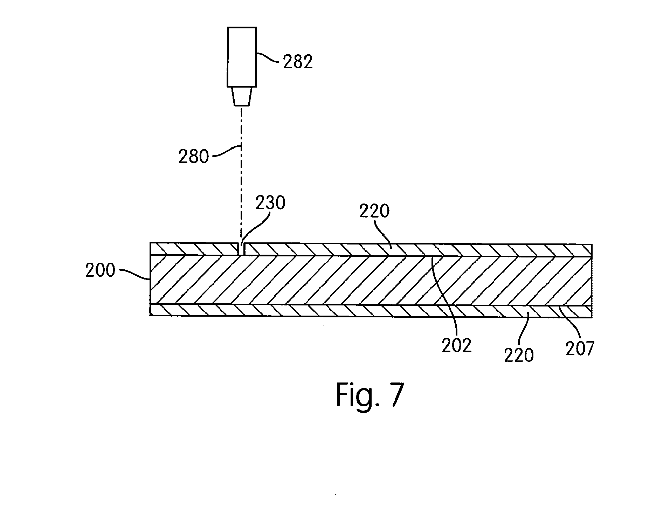

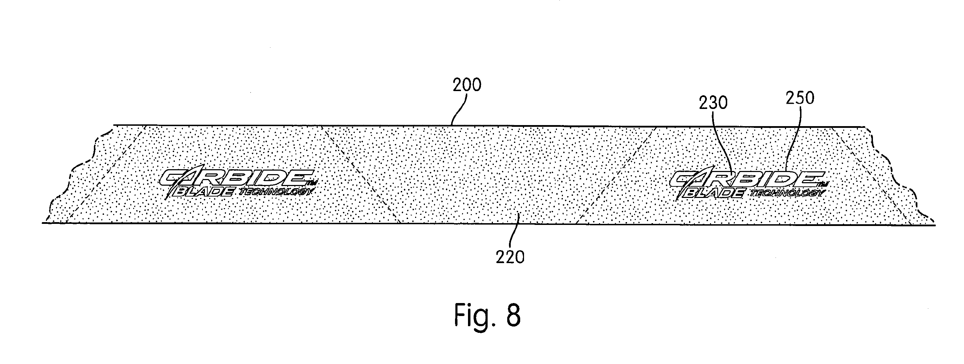

FIGS. 6 and 7 show the procedure 90 of the method 10 in accordance with various aspects of the invention. For sake of clarity, score lines and indicia formed during procedures 30 and 40 are not shown in the cross-sectional view of FIG. 7. FIG. 8 shows a top plan view of the carbon steel strip material with the indicia 250 formed on the colored oxide layer 220 of the carbon steel strip material 200.

In one embodiment, the portions 230 of the colored oxide layer 220 on the surface 202 of the carbon steel strip material 200 are removed using a laser beam 280. In one embodiment, a pulsed YAG (Yttrium Aluminium Garnet) laser 282 provides the laser beam 280 that is used to remove the selected portions 230 of the colored oxide layer 220 on the surface 202 of the carbon steel strip material 200. The laser beam 280 from the pulsed YAG laser 282 is configured to ablate the colored oxide layer 220 on the surface 202 of the carbon steel strip material 200 to expose the underlying carbon steel material. In one embodiment, the portions 230 of the colored oxide layer 220 that are removed refer to the portions of the colored oxide layer 220 on which the laser beam 280 acts.

In one embodiment, the laser 282 may be operatively connected to a controller that is configured to control various attributes of the laser beam 280. For example, the attributes of the laser beam 280 that can be controlled may include, but not limited to, the direction of the laser beam 280, the intensity of the laser beam 280, and/or focus of the laser beam. In one embodiment, indicia may be formed by programming (i.e., using a computer or a processor) the controller to traverse a specified path for the laser beam over time. Alternately, the beam may remain stationary and, the blade to be marked is carried by a movable blade holder. The blade holder may be moved by a motor mechanism that is driven by a programmed controller such that movement of the blade relative to the laser beam creates the desired pattern of indicia. The laser controller may also be programmed such that a desired removal depth may be achieved. For example, the laser can be configured to ablate the colored oxide layer 220 of the carbon steel strip material 200 without significantly altering the underlying carbon steel strip material 200.

In one embodiment, the power of the laser beam 280 is set or controlled so that the underlying carbon steel material 200 remains largely unaffected (i.e., not physically altered) by the laser marking procedure 90. For example, the power of the laser beam 280 may be controlled by changing the proportion of time (known as "duty-cycle") the laser 282 is turned on during each pulse. In one embodiment, the power range of the laser beam 280 is between 50 and 100 Watts. In another embodiment, laser sources operating at different power levels may be used.

In one embodiment, the indicia 250 on the surface 202 of the carbon steel strip material 200 may take the form of logos, serial numbers, trademarks, brand names, images, emblems, promotional or advertising markings, alphanumeric characters, geometric or decorative patterns, letters, numerals, part members, machine readable barcodes, or combinations thereof, just for example.

After laser marking the carbon steel strip material 200, in accordance with one embodiment, the carbon steel strip material 200 is optionally recoiled at procedure 100 and then transferred to next procedure 110. At procedure 110, re-hardening of the edge of the carbon steel strip material 200 is performed so as to improve the hardness of the edge of carbon steel strip material 200.

During the blade manufacturing, the hardness value is often a compromise. On one hand, a higher hardness value would result in better grinding characteristics leading to a sharper blade and a longer lifespan of the blade. However, a higher hardness value would also result in a more brittle blade. A brittle blade may be susceptible to fracture if subjected to non-axial loads (for example, pressure on flat surfaces of the blade). On the other hand, a softer blade would show improved ductility but would be blunted more quickly.

Therefore, in one embodiment, it is contemplated to provide a blade in which the body of the blade is relatively soft enough to provide ductility, while providing the blade with an edge having a relatively higher hardness value to obtain better characteristics of the edge. Providing an edge with a relatively higher hardness value permits a sharper edge to be ground, with increased lifespan.

In order to improve the hardness of the edge of carbon steel strip, at procedure 110, re-hardening is applied to the edge of the carbon steel strip. The hardness of the edge of the carbon steel strip may be improved, for example, using an induction hardening process or using a laser depositing process. In another embodiment, the hardness of the edge of the carbon steel strip may be improved, for example, by forming the edge using a bi-material. That is, in order to improve the hardness of the edge of carbon steel strip, in one embodiment, the cutting edge portion of the blade is formed from a relatively higher grade carbon steel in comparison with a lower grade carbon steel of the body. In one embodiment, the relatively higher grade carbon steel of the cutting edge portion may have a hardness range of 60 to 66 HRC. In another embodiment, the relatively higher grade carbon steel of the cutting edge portion may have a hardness range of 60 to 80 HRC. The relatively lower grade carbon steel of the body can have a hardness range of 50 to 56 HRC. The higher grade carbon steel that forms the cutting edge can be bonded, welded, or otherwise secured to the lower grade carbon steel material that forms the blade backing material.

In one embodiment, an induction hardening process is applied to the edge of the carbon steel strip. In the induction hardening process, a generator produces a high frequency alternating current at a high voltage and low current. The high frequency alternating current is passed through an inductor located in close proximity to the carbon steel strip. The high frequency current induces heating in the carbon steel strip. The temperature can be controlled by selection of the frequency of the current, by selection of the current intensity value, by selection of the geometry of the inductor, by varying the speed of travel of the strip relative to the inductor, and/or by selection of the position of the inductor relative to the work piece, i.e. the carbon steel strip. In one embodiment, the inductor is selected to be approximately 8 mm X 8 mm X 8 mm and the carbon steel strip is moved at a grinding speed of 25 meters per minute. In one embodiment, the induction heating is performed by applying an induction frequency between about 26 and 30 MHz.

The induction hardening process re-heats the carbon steel strip locally, at the cutting edge, to a temperature above the transition temperature of approximately between 800 °C and 900 °C. In one embodiment, the induction hardening process re-heats the carbon steel strip locally, at the cutting edge, to a temperature above the transition temperature of approximately 820 °C (approximately 1508 °F). The cutting edge is re-hardened by induction heating followed by rapid cooling at a rate above the critical rate to produce a hard, fully martensitic structure along the cutting edge. A rapid cooling of the cutting edge, at a rate above the critical rate, is achieved by any or a combination of the following: conduction into the body of the blade, convection into the environment, and/or artificially accelerated cooling by an air blast or liquid quench. By rapidly cooling the cutting edge of the carbon steel strip, a relatively hard cutting edge (for example, approximately 0.1 to 1.0 mm deep, from the tip of the edge to the body of the carbon steel strip) is produced on a carbon steel strip with a relatively soft body or core. Hence, the cutting edge of the carbon steel strip is harder than the body of the carbon steel strip.

In one embodiment, the induction hardening of the edge of the carbon steel strip can be carried out at any point during or after the grinding (procedure 120), honing or stropping operations, or in general before forming the individual blades (procedure 130), to produce a blade with an edge having improved hardness while the core or body of the blade is maintained relatively soft.

In another embodiment (as noted above), the hardness of the edge of the blade is improved using laser depositing. In such an embodiment, during procedure 110, the coil of carbon steel strip material is continuously fed to a hard material (e.g. tungsten carbide) deposition station that is configured to apply a coating of hard material (e.g. tungsten carbide) to an edge of the carbon steel strip. The hard material has a hardness that is significantly greater than the remaining of the carbon steel strip material. In one embodiment, the hardness of the hard material is at least 60 Rc. In one embodiment, the hardness of the hard material is in a range from about 70 to 80 Rc. In one embodiment, the deposition station includes a radiation source configured to provide a beam of radiation onto the carbon steel strip material 200. The deposition station further includes a projection system configured to project and focus the beam of radiation onto a target portion of the carbon steel strip material 200. The radiation source is configured to output a radiation beam with sufficient power and energy to melt the carbon steel strip material 200. It will be appreciated that the source of radiation 305 is not limited to a light source. For example, in one embodiment, an electron beam source may also be used in the deposition station.

In operation, the thin edge of the carbon steel strip material 200 is continuously moved under the radiation beam. Irradiation of the thin edge of the carbon steel strip material 200 creates a weld pool at the point of focus of the beam of radiation. Particles of the mixture (including the hard material) are released by the dispenser and fall freely within the weld pool under the action of gravity and the action of a propulsion gas. The propulsion gas may be helium or argon. The binder is irradiated and melted by the radiation beam while falling on the carbon steel strip material 200. As a result, substantially all the particles are already melted when they reach the weld pool. The binder element is selected to bind the hard material (e.g. tungsten carbide) to the melted material of the weld pool. All bonding between the particles and the carbon steel strip 200 is achieved by solidification of the hard material (e.g. tungsten carbide)/binder element within the weld pool. This results in a void free deposit of hard material (e.g. tungsten carbide)/binder onto the carbon steel strip material 200. An example of binder that may be used in the present embodiments includes cobalt. However, this is not limiting. It is contemplated that additional binders could be used in other embodiments. The process of depositing a mixture having hard material onto the edge of the carbon steel strip as contemplated herein can be done in accordance with U.S. Patent Application Publication No. 2009/0314136 and U.S. Patent Serial No. 12/879,115, both of which are hereby incorporated by reference in their entirety.

Referring to FIG. 1, after re-hardening the edge of the carbon steel strip 200, at procedure 120, the carbon steel strip 200 is delivered or transferred to a grinding machine for grinding an edge of the strip. In one embodiment, the grinding procedure 120 is performed to form facets defining the cutting edge along one edge of the strip carbon steel material 200. A relatively shallow angle, such as between 10 to 32 degrees is ground onto the edge of the strip. This angle is ground on both sides of the blade (although in another embodiment, an angle is ground on only one side of the blade), so that the blade is generally symmetrical relative to a longitudinal axis of the blade that bisects the edge. In addition, the ground angle is measured relative to the longitudinal axis. The angle is selected to be shallow to reduce the force that may be required to push the blade through the material it is cutting. In one embodiment, the angle of the ground edge of the carbon steel strip 200 is 22°+/-2°.

In the grinding procedure 120, the blade edge may be ground with a single angle or with multiple angles. After grinding, the edge of the carbon steel strip 200 may be honed. The process of honing puts a second, less acute, angle, such as between 26° to 36°, on top of the ground edge. This deeper honed angle gives a stronger edge than the more shallow ground angle and allows to extend the life span of the cutting edge. As a result the strip optionally may be provide with an edge with a double angle.

Stropping the edge of the carbon steel strip 200 may be optionally added to the edge production sequence. In one embodiment, soft wheels of leather or a synthetic compound are used to remove any burrs that have been produced by the honing process.

In one embodiment, instead of producing a carbon steel strip with an edge having a double angle, the edge of the carbon steel strip is ground at a single angle between 10° and 32°. In this case, the edge of the strip may not be stropped. As stated above, the stropping process is used to remove any burrs that have been produced by the honing process. In this case, because the edge of the carbon steel strip is ground and not honed, stropping may not be used.

Finally, the processed carbon steel strip is snapped along the length of the carbon steel strip at each score line to break the carbon steel strip along the score lines to produce a plurality of blades, at procedure 130. As noted above, the procedures of forming the colored oxide layer and forming indicia on the colored oxide layer are performed in-line during the manufacture of the blade. An exemplary blade obtained according to the manufacturing process is shown in FIG. 9.

It is contemplated that the method 10 may include one or more of the aforementioned procedures, but that not all of the procedures may be necessary. While the order of the procedures may be followed as described above, it is also contemplated that the order of one or more of the procedures may be changed in some cases. For example, in one embodiment, the induction hardening of the edge of the carbon steel strip can be carried out at any point during or after the grinding (procedure 120), honing or stropping operations.

FIG. 9 shows an exemplary knife blade 900 according to various aspects of the present invention. The blade 900 is a knife blade suitable for mounting on a utility knife handle (not shown).

In one embodiment, the blade 900 includes a body 950 formed from a carbon steel material. The body 950 having a cutting edge portion 952 and side surface 954. The side surface 954 has a colored oxide layer 956 formed thereon. Selected portions 958 of the oxide layer 956 have been removed to reveal the underlying carbon steel material 980 so as to provide the indicia 960 on the surface 954 of the blade 900 by virtue of a color contrast between the colored oxide layer 956 and the revealed carbon steel material 980. In one embodiment, the oxide layer 956 on the surface 954 of the blade 900 has a gold color, a red color, black color, a blue color, gray-blue color, a blue-back color or any other color that provides good contrast with underlying bright steel color.

In one embodiment, the color of the oxide layer 956 may depend on the temperature maintained in the tempering furnace 302 (as shown in FIG. 3) and/or time spent by the carbon steel material 980 in the tempering furnace.

In one embodiment, the temperature maintained in the tempering furnace 302 (i.e., during the formation of the oxide layer 956) is between 280 °C and 400 °C. In another embodiment, the temperature maintained in the tempering furnace 302 (i.e., during the formation of the oxide layer 956) is 380 °C.

In one embodiment, time spent by the carbon steel material 980 in the tempering furnace 302 (i.e., during the formation of the oxide layer 956) is between 45 and 75 seconds. In another embodiment, time spent by the carbon steel material 980 in the tempering furnace 302 (i.e., during the formation of the oxide layer 956) is 60 seconds.

In one embodiment, the cutting edge portion 952 has a hardness greater than a hardness of a remaining body portion (or "backing portion") 950. In one embodiment, the hardness of the remaining body portion 950 is between 50 HRC and 56 HRC. In one embodiment, the hardness of the cutting edge portion 952 is between 60 HRC and 80 HRC, just as a non-limiting example. In another embodiment, the hardness of the cutting edge portion 952 is between 60 HRC and 66 HRC

As discussed above, in one embodiment, the cutting edge portion 952 of the blade 900 is induction hardened. In another embodiment, the cutting edge portion 952 of the blade 900 is formed from a relatively higher grade carbon steel in comparison with a lower grade carbon steel of the body 950. In yet another embodiment, the cutting edge portion 952 of the blade 900 is formed by laser deposition.

In one embodiment, the side edges 924 of the blade 900 shown in FIG. 9 are configured to form a trapezoidal blade. That is, the blade 900 has a trapezoidal shape, a longest side of which includes the linear cutting edge 952. A shorter side 982 of the blade 900 includes at least one locating notch 922a, 922b which can be employed to secure the blade 900 to utility knife blade carrier or blade holder assembly (not shown) to prevent the blade 900 from moving longitudinally forwardly or rearwardly out of engagement with the blade holder assembly. Other blade types and shapes can also be made in accordance with the teachings herein.

Numerous modifications and changes will readily occur to those of skill in the art. For example, while manufacturing a blade with one sharp edge is described herein, manufacturing a blade with more than one sharp edge is also contemplated. Furthermore, it must be appreciated that various aspects of the structure and/or various aspects of the manufacturing processes described herein can be applied to the manufacture of not only utility knife blades, but also chisel blades, plane iron blades, other tool blades, carpentry tool blades, sport blades, kitchen blades, and the like.

The embodiment of the blade 900 shown in the figures and described above is exemplary only and not intended to be limiting. It is contemplated herein to provide any blade (such as a saw blade, knife blade or any type of cutting blade). In addition, the method herein can be applied to other metallic hand tools or products that do not have a blade. For example, the aspects of forming the colored oxide layer and forming indicia (using a laser) thereon according to the principles of the present invention can be applied to other tools or tool assemblies. For example, as noted above, indicia (e.g., part number, serial number and/or barcode) may be formed on the surface of such tools or tool assemblies.

Although the invention has been described in detail for the purpose of illustration, it is to be understood that such detail is solely for that purpose and that the invention is not limited to the disclosed embodiments, but, on the contrary, is intended to cover modifications and equivalent arrangements that are within the scope of the appended claims. In addition, it is to be understood that the present invention contemplates that, to the extent possible, one or more features of any embodiment can be combined with one or more features of any other embodiment.

## Claims

1. A method of manufacturing a blade comprising:
providing a coil of carbon steel strip material having a surface thereon to be marked;
forming a colored oxide layer on the surface of the material; and
selectively removing portions of the colored oxide layer to reveal underlying carbon steel material so as to form indicia on the surface of the material by virtue of a color contrast between the colored oxide layer and the revealed carbon steel material.

2. The method of claim 1, wherein the forming is performed in an oxidizing atmosphere.

3. The method of claim 2, wherein the oxidizing atmosphere is provided by a tubular member of a heat treatment furnace, and wherein the tubular member is constructed and arranged to allow a path for air ingress.

4. The method of claim 3, further comprising providing a supplemental oxidizing atmosphere.

5. The method of claim 4, wherein the supplemental oxidizing atmosphere is provided by an air supply system configured to supply air at a pressure of 1 bar and a flow rate of 26 liters/minute.

6. The method of any of the preceding claims, wherein the forming is performed at a temperature between 280 and 400 °C.

7. The method of any of the preceding claims, further comprising, subsequent to the forming, quenching the material for ease of handling during the selective removing.

8. The method of claim 7, wherein the quenching is performed by passing the material between fluid cooled quench blocks disposed above and below the material.

9. The method of any of the preceding claims, wherein the removing comprises applying a laser beam to the selected portions of the oxide layer.

10. The method of any of the preceding claims, wherein the forming is performed for a time period between about 45 and 75 seconds.

11. The method of claim 9, wherein the power range of the laser beam is between 50 and 100 Watts.

12. A blade comprising:
a body formed from a carbon steel material, the body having a cutting edge portion and a side surface;
wherein the side surface has a colored oxide layer formed thereon, and wherein selected portions of the oxide layer have been removed to reveal the underlying carbon steel material so as to provide indicia on the surface of the blade by virtue of a color contrast between the colored oxide layer and the revealed carbon steel material.

13. The blade of claim 12, wherein the blade is a knife blade suitable for mounting on a utility knife handle.

14. The blade of any of the preceding claims, wherein the oxide layer has gray-black color, black color, blue color or blue-back color.

15. The blade of any of the preceding claims, wherein the selected portions of the colored oxide layer is removed with a laser beam.
